# EUROPEAN PATENT APPLICATION

(11) **EP 2 206 639 A1**
(43) Date of publication of application: **14.07.2010**
(21) Application number: 09150395.3
(22) Date of filing: 12.01.2009
(51) Int. Cl.: B62D 35/00

(54) **Air resistance reducing device for a vehicle**

(71) Applicant: F.C. van der Kooij B.V., 1067 TA Amsterdam (NL)
(72) Inventor: van der Kooij, Frederik Cornelis, 1067 TA, Amsterdam (NL)
(74) Representative: Voncken, Bartholomeus Maria Ch.

(57) **Abstract**

An air resistance reducing device (2) for a vehicle, such as for example a truck, van or bus, is provided. It comprises a body (16,17) to be attached to the rear of the vehicle, which body in an operative position has an outline for streamlining air flowing around the rear of the vehicle and which is collapsible to an inoperative position with reduced dimensions. In one embodiment the body comprises a flexible hull (5) for defining the said outline and tensioning means (10) for, in the operative position, keeping the hull in the desired shape.

## Description

The invention relates to an air resistance reducing device for a vehicle, such as for example a truck, van or bus.

The air resistance of a vehicle, and especially a vehicle of which, due to its intended use and function, the aerodynamic shape is suboptimal (such as, for example trucks, vans and buses of which the loading capacity is a major cco-nomical value which strongly dictates the shape of said vehicles), contributes largely to the fuel consumption and thus emission of exhaust gases. In the past air resistance reducing devices for vehicles have been proposed.

It is an object of the present invention to provide an improved air resistance reducing device for a vehicle.

In accordance with the present invention the air resistance reducing device comprises a body to be attached to the rear of the vehicle, which body in an operative position has an outline for streamlining air flowing around the rear of the vehicle and which is collapsible to an inoperative position with reduced dimensions.

At high speeds the device can assume its operative position for the reduction of air resistance. In the operative position the device also may serve an additional function of increasing the traffic safety because it firstly can create a safety buffer for vehicles coming from behind and secondly will define an optical obstruction which results in following drivers keeping a larger distance.

At low speed, for example when driving in an urban area, the device may assume its collapsed inoperative position because, on one hand, at such low speeds the effect of air resistance is secondary and, on the other hand, the length of the vehicle should be limited in such urban areas.

Preferably the body comprises a flexible hull for defining the said outline and tensioning means for, in the operative position, keeping the hull in the desired shape.

Such a combination of flexible hull and tensioning means offers favourable aerodynamic characteristics and a fine collapsibility of the device.

In one embodiment of the device according to the present invention the tensioning means comprise at least one rod which can pivot between an operative position and an inoperative position. For example such a rod may pivot around a pivot at a lower end thereof and may extend inclined upward from the pivot and away from the rear of the vehicle when in the operative position, while extending substantially in parallel to and close to said rear when in the inoperative position (in which the hull is collapsed or folded towards or against the rear of the vehicle). The inclined position of the rod in its operative position allows its automatic movement to the inoperative position when hit by a vehicle approaching from behind, thus increasing the safety of the device.

Further it is possible that auxiliary means are provided engaging the hull for moving the hull to a collapsed position when the body moves from the operative to the inoperative position. Such auxiliary means promote a movement of the flexible hull to a well-defined collapsed (or folded) position and may prevent unduly wear of the hull.

Preferably, then, said auxiliary means comprise spring means, for example tension spring.

In a special embodiment of the device according to the present invention the tensioning means comprise a number of pivotable rods which, in the operative position, offer the body an aerodynamically favourable outline, such as for example a substantially drop shaped outline. This offers the possibility to optimize the aerodynamical shape of the body in the operative position while still having the opportunity to collapse the device.

It is noted that the rods not only serve as tensioning members, but also may help in achieving the proper collapsing motion of the body in general, and of the hull specifically.

In a handy embodiment driving members, such as for example electric, hydraulic or pneumatic motors or actuators, are provided for moving the rods (and thus the hull) between the operative and inoperative positions. Such driving members may be activated through a control unit receiving signals from sensors, such as a vehicle speed sensor, for automatically moving the device between its operative and inoperative positions. However, it is possibly too that the device is operated manually.

For improving the stability of the device in the operative position, it is conceivable that it is provided with operable locking means for locking the rods in the operative positions.

Then, for preventing unsafe situations (for example when the device is hit by a vehicle arriving from behind), it is favourable when the locking means comprise members which lose their locking action when subjected to a force above a defined threshold force, such as for example breaking pins or alike.

It is noted that there also may be provided controllable locking means for locking the rods in the inoperative positions.

Although in its most simple embodiment the hull is a cloth spanning the rods (for example made of fibre reinforced plastic material, PVC or alike), in another embodiment of the device according to the present invention the hull comprises a closed inflatable hull, wherein the device is provided with inflation means therefor, such as an air pump. In the inflated, operative position of the hull its internal pressure ads to the stability and correct shape of the body. The air pump also may be used to evacuate the hull for assuming and maintaining its inoperative, collapsed position.

When the device according to the present invention is intended for use with a truck comprising two hingeable rear cargo compartment doors, said body may comprise two separate body parts with respective tensioning means assigned to each of said body parts. As a result the device does not hinder opening and closing said doors for gaining access to the cargo compartment. It may be necessary, however, to mount said body parts in such a manner that door latches or alike still are accessible for operation. Combined, said body part define a body as needed, however provided with a separation therebetween where the two doors meet.

It may be advantageous when the body (or body part) is supported by a base assembly adapted to be connected to the rear of the vehicle in a pivotable manner. Especially when applied to the rear of a vehicle provided with doors (or a single loading hatch), such an embodiment offers the possibility to pivot the body or body (horizontally or vertically) to a position in which the doors (or loading hatch) can be opened in an unobstructed manner.

For example the base assembly may comprise a board or frame with dimensions closely matching the dimensions of said rear of the vehicle (or the dimensions of a respective rear cargo compartment door).

Then, in a special embodiment of the device according to the present invention, the board or frame defines a case with two case halves pivotably interconnected and movable between an adjoining closed position in which the body (parts) and tensioning members are housed within said case (and thus are in the inoperative, collapsed positions), and a separated open position in which the body (parts) and tensioning members assume their operative positions. In the closed position of the case the device is protected against external influences or tampering.

Finally, when such a case is provided, the device may be provided with driving members, such as electric, hydraulic or pneumatic motors or actuators for moving the case (case halves) between its closed and open positions.

Hereinafter the invention will be elucidated while referring to the drawing in which:
Figure 1 illustrates schematically a truck provided with an air resistance reducing device;
Figure 2 illustrates perspectively and schematically a first embodiment of the device according to the present invention;
Figure 3 illustrates schematically in a side elevational view a third embodiment of the device according to the present invention;
Figure 4 illustrates schematically in a side elevational view a fourth embodiment of the device according to the present invention and
Figure 5 illustrates schematically in a top plan view a fifth embodiment of the device according to the present invention.

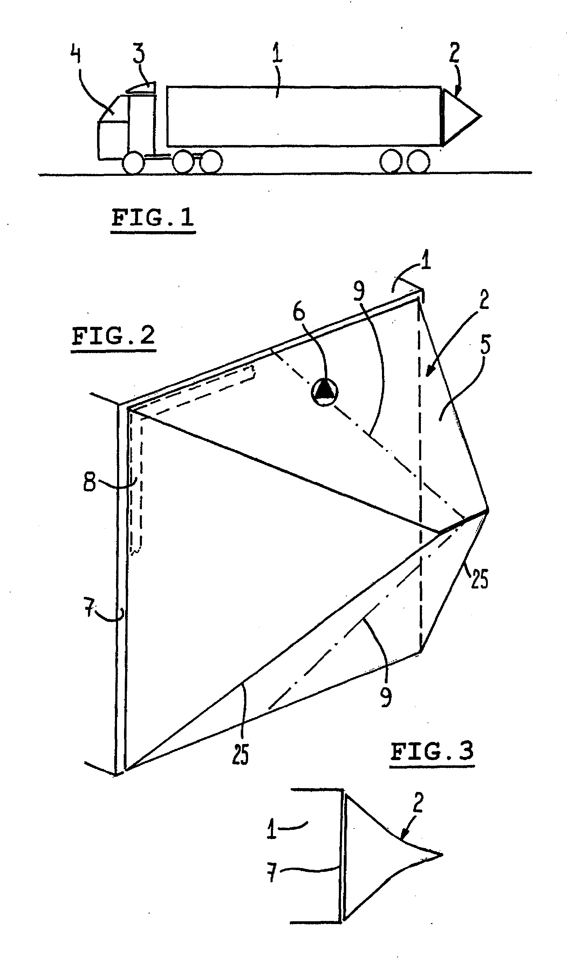

Firstly referring to figure 1 a truck 1 is illustrated which is provided with an air resistance reducing device 2 to be attached to the rear of the truck. Alone, or in combination with other devices, such as a device 3 mounted on top of the driver cabin 4 of the truck 1, this device 2 is capable of substantially reducing the air resistance of the truck 1. For this reason the device 2 comprises a body which in an operative position has an outline for streamlining the air flowing around the rear of the truck and which is collapsible to an inoperative position with reduced dimensions (and preferably close to the truck).

For example referring to the embodiment according to figure 2, the body comprises a flexible hull 5 for defining the said outline and tensioning means for, in the operative position, keeping the hull 5 in the desired shape. In this specific embodiment the tensioning means may comprise an air pump 6 for supplying (compressed) air into the hull 5 which, therefore, must define a closed space. The hull 5 may surround an enclosed void for receiving the air from the air pump 6, or may itself be double-walled with an inner enclosed space for receiving the air. The air pump 6 (or other inflation means) also may be used to evacuate the hull 5 for moving it to the collapsed position.

The hull 5 may be attached directly to the rear 7 of the truck 1, or by means of a frame, board or other means 8 attached to the truck, with dimensions which may closely match the dimensions of said rear of the truck.

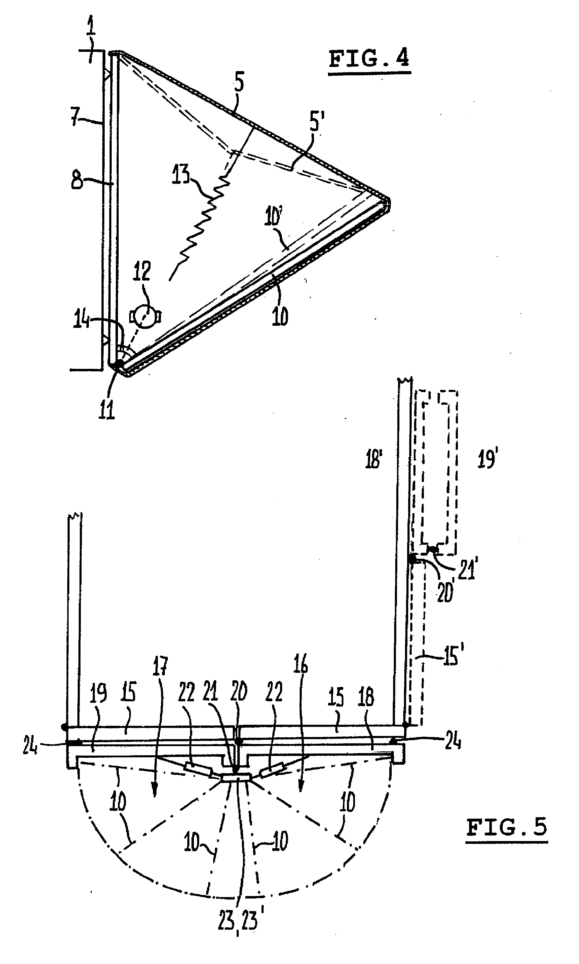

A chain line 9 illustrates an optional division, such that the body comprises two mirror image sub bodies adjacent each other together defining the body of the device. Such an embodiment may be useful when the rear of the truck comprises two cargo compartment doors (as shown later with respect to figure 5, for example).

In the operative position the body of the device 2 may have an aerodynamically favourable outline, such as for example a substantially drop shaped outline as illustrated in figure 3.

In figure 4 an embodiment is illustrated in a schematical side elevational view, in which the tensioning means comprise at least one rod 10 engaging the hull 5 which can pivot around a pivot 11 between an operative position and an inoperative position. This pivoting motion may be caused manually or by a driving member, such as for example an electric, hydraulic or pneumatic motor 12 or actuator for moving the rod 10 between the operative position illustrated in figure 4 and an inoperative position (close to the rear 7 of the truck 1).

In the embodiment of figure 2 such rods 10 also may be applied, for example at the inner side of the two lower ribs 25 of the body (and the outer ends then may be connected through a transverse rod -not illustrated-).

Further, now auxiliary means 13 are provided engaging the hull 5 for moving the hull to a collapsed position when the rod 10 moves from the operative to the inoperative position. Said auxiliary means may comprise spring means.

Also in this embodiment, the tensioning means may comprise a number of pivotable rods 10 which, in the operative position, offer the body an aerodynamically favourable outline, such as for example a substantially drop shaped outline as shown in figure 3. Further the use of rods 10 may be combined with an inflatable hull 5 and pump 6 as mentioned with respect to figure 2.

Operable locking means 14 for locking rod 10 in the operative positions may be provided, such as members which lose their locking action when subjected to a force above a defined threshold force, such as for example breaking pins or alike, or locking means operating in dependence of a pump 6.

Next referring to figure 5, an embodiment of the device according to the present invention is illustrated in a schematical top view. The truck comprises two hingeable rear cargo compartment doors 15, wherein said body comprises two interconnected body parts (or halves) 16 and 17 with tensioning means (rods) 10.

Each body part 16 and 17 is supported by a base assembly 18, 19 adapted to be connected to the rear of the truck in a pivotable manner. For this, base assembly 18 is connected to the respective (right) door 15 by pivot 20, whereas base assembly 19 is connected to base assembly 18 through pivot 21.

The base assemblies may comprise a board or frame with dimensions closely matching the dimensions of said rear of the truck (or the dimensions of a respective rear cargo compartment door).

Then, in the present embodiment, the base assemblies 18, 19 (board or frame) define a case with two case halves pivotably interconnected (through pivot or hinge 21) and movable between an adjoining closed position in which the body parts 16, 17 and tensioning members 10 are housed and protected within said case, and a separated open position in which the body parts and tensioning members assume their operative positions. Specifically, figure 5 shows in full lines the open position (in which the base assemblies may be connected to the cargo doors by additional locking members 24). Pivoting base assembly 19 around pivot 21 will result in the closed position of the case. Next, opening the right door 15 while at the same time pivoting the closed case around pivot 20 will result in the position illustrated in dotted lines, with the cargo door 15' open and case in the closed position (in which the rods 10 and hull still are collapsed within the case).

The case may be provided with access ports (not shown) for allowing access to door grips or alike of the cargo doors 15.

Driving members, such as electric, hydraulic or pneumatic motors or actuators for moving the case between its closed and open positions may be provided. In the illustrated embodiment cylinder-piston assemblies 22 are shown.

The rods 10 in the embodiment of figure 5 may extend bow shaped from an upper central plate 23 towards a corresponding lower central plate 23' attached to pivot (or pivots) 21.

Again, also in this embodiment the tensioning means or rods 10 may, in the operative position, offer the body an aerodynamically favourable outline, such as for example a substantially drop shaped outline as shown in figure 3.

The above case also may be mounted to the rear of the truck in a position rotated over 90° when the truck comprises a single loading hatch with horizontal pivot axis. Further, also here an inflatable hull 5 may be applied, or a small inflatable hull part attached to the rear of the body for improving the aerodynamic shape of the body.

Generally, the hull 5 may be provided with reinforcement members (strips or alike) for a better retention of the operative position of the body.

The invention is not limited to the embodiments described before, which may be varied or combined in many ways within the scope of the invention as defined by the appending claims.

## Claims

1. Air resistance reducing device for a vehicle, such as for example a truck, van or bus, comprising a body to be attached to the rear of the vehicle, which body in an operative position has an outline for streamlining air flowing around the rear of the vehicle and which is collapsible to an inoperative position with reduced dimensions.

2. Device according to claim 1, wherein the body comprises a flexible hull for defining the said outline and tensioning means for, in the operative position, keeping the hull in the desired shape.

3. Device according to claim 2, wherein the tensioning means comprise at least one rod which can pivot between an operative position and an inoperative position.

4. Device according to claim 2 or 3, wherein auxiliary means are provided engaging the hull for moving the hull to a collapsed position when the body moves from the operative to the inoperative position.

5. Device according to claim 4, wherein said auxiliary means comprise spring means.

6. Device according to any of the claims 2-5, wherein the tensioning means comprise a number of pivotable rods which, in the operative position, offer the body an aerodynamically favourable outline, such as for example a substantially drop shaped outline.

7. Device according to any of the claims 2-6, wherein driving members, such as for example electric, hydraulic or pneumatic motors or actuators, are provided for moving the rods between the operative and inoperative positions.

8. Device according to any of the claims 2-7, provided with operable locking means for locking the rods in the operative positions.

9. Device according to claim 8, wherein the locking means comprise members which lose their locking action when subjected to a force above a defined threshold force, such as for example breaking pins or alike.

10. Device according to any of the previous claims, wherein the hull comprises a closed inflatable hull and wherein the device is provided with inflation means therefor, such as an air pump.

11. Device according to any of the previous claims and intended for use with a truck comprising two hingeable rear cargo compartment doors, wherein said body comprises two separate body parts with respective tensioning means assigned to each of said body parts.

12. Device according to any of the previous claims, wherein the body (or body part) is supported by a base assembly adapted to be connected to the rear of the vehicle in a pivotable manner.

13. Device according to claim 12, wherein the base assembly comprises a board or frame with dimensions closely matching the dimensions of said rear of the vehicle (or the dimensions of a respective rear cargo compartment door).

14. Device according to claim 12 or 13, wherein the board or frame defines a case with two case halves pivotably interconnected and movable between an adjoining closed position in which the body (parts) and tensioning members are housed within said case, and a separated open position in which the body (parts) and tensioning members assume their operative positions.

15. Device according to claim 14, provided with driving members, such as electric, hydraulic or pneumatic motors or actuators for moving the case between its closed and open positions.
